Europäisches Patentamt

European Patent Office

Office européen des brevets

(11) Publication number: **0 473 220 A2**

## EUROPEAN PATENT APPLICATION

(21) Application number: 91202059.1

(22) Date of filing: 13.08.91

(51) Int. Cl.5: **C08G 18/66**, C08G 18/76,
//(C08G18/66,101:00)

(30) Priority: **30.08.90 US 575029**

(43) Date of publication of application:
**04.03.92 Bulletin 92/10**

(84) Designated Contracting States:
**DE FR GB**

(71) Applicant: **GENERAL MOTORS CORPORATION**
**General Motors Building 3044 West Grand**
**Boulevard**
**Detroit Michigan 48202(US)**

(72) Inventor: **Ashida, Kaneyoshi**
**28139 New Bedford**
**Farmington Hills, MI 48018(US)**

(74) Representative: **Haines, Arthur Donald et al**
**Patent Section Vauxhall Motors Limited 1st**
**Floor Gideon House 28 Chapel Street**
**Luton, Bedfordshire LU1 2SE(GB)**

(54) Energy-absorbing flexible polyurethane foam.

(57) A polyurethane liquid crystal polymer-modified polyurethane foam composition (20) having superior impact strength and flexural modulus is produced by the simultaneous reaction and formation of a polyurethane liquid crystal polymer (18) and a polyurethane foam (16).

*Fig.1.*

The present invention generally relates to an energy-absorbing flexible polyurethane foam that can be processed in a reaction-injection-moulding process, and more particularly, is concerned with an energy-absorbing flexible polyurethane foam re-inforced with a liquid crystal polymer (LCP) that can be processed in a reaction-injection-moulding (RIM) process.

Energy-absorbing flexible polyurethane foam materials have been broadly used in the automotive industry to meet safety and comfort requirements in automotive vehicles. Energy-absorbing bumper systems consist of bumper covers made of polyurethane reaction-injection-moulded (RIM) material and energy-absorbing foam cores made of flexible polyurethane foam or polypropylene foam. These types of energy-absorbing foam are used for shock absorbing in the case of a vehicle impact.

Sound-absorption capability is also important for passenger comfort in an automobile. Sound-absorbing foam is commonly used between a passenger compartment of a vehicle and an engine or transmission of that vehicle. Vibration damping by using flexible foam is another desirable requirement for passenger comfort. A good flexible foam material used in seating can prevent long-time driving fatigue. It is especially suited for use in truck seats and seats for handicapped persons.

In general, a superior energy-absorbing foam material for the absorption of either impact, sound, or vibration is desirable in automotive applications. The energy-absorption capability of a foam material can be measured in terms of hysteresis loss, since the higher the hysteresis loss in the foam, the higher is the energy-absorption capability thereof. It is commonly known that conventional flexible foam materials have the following hysteresis loss characteristics, namely, 40% for aliphatic polyester-based foams, 20% for aliphatic polyether-polyol-based foams, and 12% for high resilience foams. Semi-rigid foams such as the aliphatic polyester-type usually have relatively high hysteresis loss, however, this type of foam generally has poor resilience and other physical properties.

It is, therefore, an object of the present invention to provide an energy-absorbing flexible polyurethane foam having high energy-absorbing property, as measured in hysteresis loss, without sacrificing other desirable physical properties of the foam such as resilience, tensile strength, tear strength, and load-bearing strength.

It is another object of the present invention to provide an energy-absorbing flexible polyurethane foam having high energy-absorbing property and superior resilience property which can be manufactured by using conventional foaming machines.

In accordance with a preferred practice of the present invention, a high energy-absorbing flexible polyurethane foam having superior resilience property can be produced by a conventional foaming machine. The chemistry involved in the preparation of this high energy-absorbing flexible polyurethane foam includes the reaction of an organic polyisocyanate with a polyol and a liquid crystal-forming agent selected from the group consisting of $c_6$ - $C_{10}$ alkane diols in the presence of a blowing agent, a catalyst, and a surfactant. The liquid crystal-forming agent, such as 1,6-hexane diol, reacts with the organic polyisocyanate to form a liquid crystal polymer in the matrix of the polyurethane foam. The presence of the liquid crystal polymer is confirmed by laboratory test methods such as differential scanning calorimetry and scanning electron microscope.

The preferred organic polyisocyanates are those having symmetrical structures such as diphenylmethane di-isocyanate and p-phenylene di-isocyanate. The polyols used in the present invention for making flexible polyurethane foams can be conventional polyols which include polyether polyols and polyester polyols. Examples of such polyols are polyols having an average equivalent weight of at least 3000 and a functionality of at least two, preferably a polyether triol having an equivalent weight of at least 3000. One of the unique features of the present invention is that liquid crystal polymers are formed in situ with the simultaneous formation of polyurethane linkages such that the liquid crystal polymers are incorporated into the polyurethane foam structure. This in situ forming of liquid crystal polymers in the matrix of the polyurethane makes it possible to incorporate liquid crystal polymer in the foam without any other secondary processing methods such as melt-blending or solution-making.

The present invention produces high energy-absorbing polyurethane foams having superior energy-absorbing property in terms of hysteresis loss values between 70-80% without the sacrifice of other desirable properties of the polyurethane foams.

The invention and how it may be performed are hereinafter particularly described, with reference to the accompanying drawings, in which:

Figure 1 is a process flow diagram of the present invention;

Figure 2 is a graph showing the hysteresis loss loop of the present invention containing 0% alkane diol;

Figure 3 is a graph showing the hysteresis loss loop of the present invention containing 5 weight percent 1,6-hexane diol; and

Figure 4 is a graph showing the hysteresis loss loop of the present invention containing 10 weight percent 1,6-hexane diol.

The present invention is a novel technique which allows for the making of a high energy-absorbing polyurethane foam by the simultaneous formation of a polyurethane liquid crystal polymer and a polyurethane foam.

The invention provides a major processing advantage in that the polyurethane liquid crystal polymer is formed in situ during the reaction of the polyurethane foam in the matrix of the foam such that the decomposition problems of liquid crystal polymers that occur when such liquid crystal polymers melt-blended into a polyurethane foam are avoided.

The novel high energy-absorbing polyurethane foam of the invention has superior physical properties such as resilience, tensile strength, tear strength, and load bearing or compressive strength.

By liquid crystal polymer is meant a polymer consisting of mesogen sections and flexible spacer sections. The mesogen sections are defined as rigid segments such as phenyl, naphthyl and other similar aromatic groups. The flexible spacer sections (or "soft segments") are usually composed of aliphatic hydrocarbon linear chains.

The ratio of the respective lengths of both the mesogen section and the soft spacer section of a liquid crystal polymer is important in the formation of liquid crystal polymers. It has been found that a desirable ratio of the length of mesogen section to soft spacer section should be higher than 6. Most polyurethane-based liquid crystal polymers have inherent processing disadvantages in the thermal stability of the material. The polyurethane-based liquid crystal polymers have low thermal stability and, therefore, they decompose at normal polymer processing temperatures. This property deficiency makes it difficult to produce moulded products of polyurethane-based liquid crystal polymers by conventional processing techniques such as the injection-moulding process. It is, therefore, impossible to blend polyurethane-based liquid crystal polymers into other polymers by melt-blending.

The present invention proposes a novel technique which makes it possible to incorporate polyurethane-based liquid crystal polymers into a polyurethane foam matrix by a simultaneous reaction-injection-moulding (RIM) process. A polyurethane liquid crystal polymer forming agent selected from $C_6$ - $C_{10}$ alkane diols is added in the polyurethane RIM process for the in situ forming of liquid crystal polymer in the polyurethane matrix. The novel process of the invention produces highly energy-absorbing flexible polyurethane foams having a significantly higher energy-absorbing capability, i.e., between 70-80% hysteresis loss values. These hysteresis loss values are significantly higher than those obtained with conventional so-called energy-absorbing foams.

The liquid crystal polymer-forming agents that have been used are 1,6-hexane diol, 1,8-octane diol and 1,10-decane diol. The amount of the liquid crystal polymer-forming agent is approximately 1-50 parts by weight per 100 parts by weight of the polyol. A more preferred range of the liquid crystal polymer-forming agent is between 2-20 parts by weight per 100 parts by weight of the polyol.

The polyisocyanates that have been used in the present invention include different aromatic polyisocyanates such as p-phenylene di-isocyanate (PPDI), diphenylmethane di-isocyanate (MDI) and its modified liquid products such as carbodi-imide-modified or urethane-modified MDI, toluene di-isocyanate (2,4-, 2,6-isomers) and different mixtures thereof. Preferred polyisocyanates to be used are those having symmetrical structures such as MDI and PPDI.

The polyols that have been used for the novel invention to produce flexible polyurethane foams include both polyether and polyester polyols. The polyether polyols include di-functional and tri-functional polyether polyols having a hydroxyl number of about 50 or less. High molecular weight polyether polyols having a molecular weight between 10,000 and 20,000 are also suitable for the novel invention.

Polyester polyols have also been used such as that obtained as a reaction product of adipic acid and alkane diols having a hydroxyl number of about 50-60. Other aromatic polyester polyols produced by the transesterification of polyethylene terephthalate or dimethyl terephthalate or its distillation residue may also be suitably used in combination with the polyols. Mixtures of the polyether polyols and the polyester polyols may also be used. For example, a preferred polyol mixture is a blend of a trifunctional polyether polyol having an equivalent weight of between 3000 and 5000 and an aromatic polyester polyol prepared by the transesterification of polyethylene terephthalate or dimethyl terephthalate in an amount of up to 40 parts by weight per 100 parts by weight of the total weight of the polyether polyol.

The blowing agents used for the foaming reaction include chemical blowing agents and physical blowing agents. The chemical blowing agents include water, nitroethane, acetaldoxime, acetylacetone, acetamide, and boric acid. The physical blowing agents can be selected from non-reactive solvents having low boiling-points at about 20-80°C such as $CCl_3F$, $CHCl_2F_3$, $CH_3CCl_2F$, $CH_2Cl_2$, and $C_5H_{12}$.

Catalysts used in the present invention include metal catalysts such as dibutyl tin dilaurate or stannous octoate, and tertiary amines, such as triethylene diamine or dimethylaminoethyl ether.

3

The surfactants used in the present invention include silicone-oxyalkylene block copolymers. Many kinds of these copolymers are available as commercial products.

Any other additives, such as colourants or fillers, can be added in the systems of the present invention, if desired.

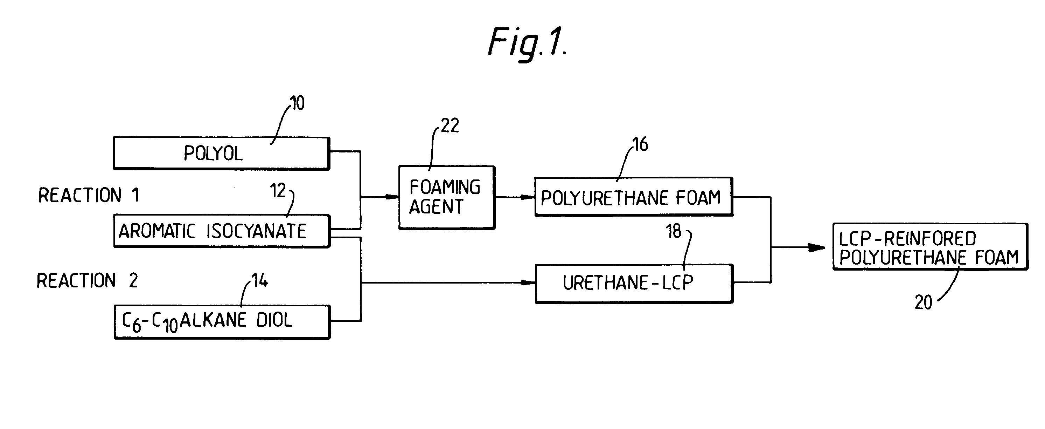

Referring initially to Figure 1, where a process flow diagram of the novel invention is shown, the method of the invention is composed of two parallel and simultaneous reactions, i.e., Reaction 1 and Reaction 2 as shown in Figure 1 for the formation of two different polymers. In Reaction 1, a polyol 10 and a polyisocyanate 12 react in the presence of a foaming agent 22 to form a polyurethane foam 16. In Reaction 2, which occurs substantially simultaneously with Reaction 1, the aromatic isocyanate 12 reacts with a $C_6$ - $C_{10}$ alkane diol 14 to form a urethane liquid crystal polymer 18. Since the two Reactions occur substantially simultaneously in the same mould cavity, the urethane liquid crystal polymer 18 is formed in situ with the polyurethane polymer 16, which results in the formation of a urethane liquid crystal polymer-re-inforced polyurethane foam 20.

The following are examples of the present invention. Examples 1, 2, and 3 are shown in Table 1.

TABLE 1

| Formulation (g) | EXAMPLE 1 | EXAMPLE 2 | EXAMPLE 3 |
|---|---|---|---|
| Pluracol (R.T.M.) 726 * | 100 | 95 | 90 |
| 1,6-Hexanediol | 0 | 5 | 10 |
| DC (R.T.M.)-190 ** | 0.5 | 0.5 | 0.5 |
| Dabco (R.T.M.) 33LV *** | 0.5 | 0.5 | 0.5 |
| Dabco (R.T.M.) T-12 **** | 0.1 | 0.1 | 0.1 |
| Water | 1.5 | 1.5 | 1.5 |
| Isonate (R.T.M.) 143L***** | 42.2 | 46.4 | 67.3 |
| Isocyanate Index | 110 | 110 | 110 |

\* Polyether polyol, Equivalent weight 967 (BASF)
\** Silicone surfactant (Dow, Corning)
\*** Tertiary amine catalyst (Air Products)
\**** Dibutyltin dilaurate (Air Products)
\***** Modified MDI (Dow Chemical) Equivalent Weight: 144.

| Processing Conditions | | | |
|---|---|---|---|
| Cream time, sec. | 19 | 17 | 23 |
| Rise time, sec. | 49 | 55 | 49 |
| Tack-free time, sec. | 58 | 97 | 62 |

| Physical Properties | | | |
|---|---|---|---|
| Foam density, pcf. | 53 | 39 | 46 |
| kg./m$^3$ | 85 | 62 | 74 |
| Hysteresis loss, % | 46 | 54 | 71 |
| Ball rebound, % | 27 | 37 | 18 |

The effects of LCP on the energy-absorption capabilities of the resulting foams are indicated by the hysteresis loss data. Increasing the amount of LCP (a reaction product of 1,6-hexanediol and Isonate (R.T.M.) 143L), increases the hysteresis loss values as shown in Examples 2 and 3.

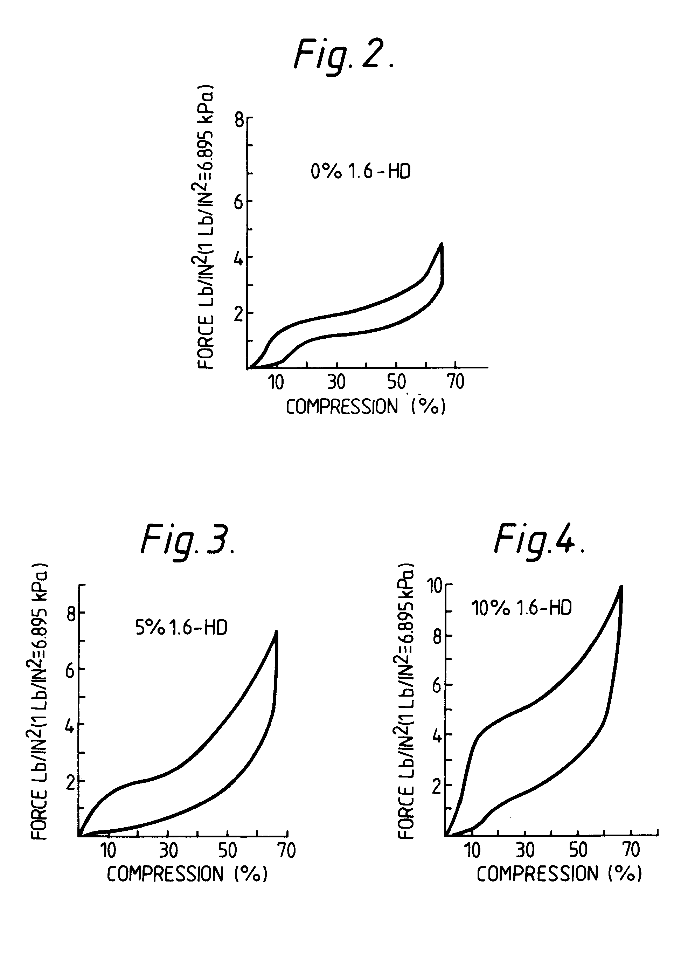

These hysteresis loss values are illustrated graphically in Figures 2, 3 and 4 of the accompanying drawings.

The preparation of foams was conducted according to the following manner.

The ingredients in the Examples, except Isonate [R.T.M.] 143L, were mixed and stirred in a paper cup to make a homogenous solution. Into the mixture, Isonate [R.T.M.] 143L was poured and stirred immediately, and the mixture allowed to rise. After foam rise was completed, the resulting foams were cured in an oven at about 80°C overnight. After the foams were post-cured at room temperature for at least one day, physical properties of the foams were determined.

Examples 4, 5, 6, 7, and 8 are shown in Table 2. Instead of the polyether polyol used in Examples 1, 2 and 3, a graft polyether polyol (Niax [R.T.M.], made by Union Carbide) or a mixture of polyether polyol and graft polyether poly is used in Examples 4 to 8. A marked improvement in the energy-absorbing capability is observed in all the Examples as indicated by the hysteresis loss data.

Table 2

| Formulation (g) | EXAMPLE 4 | EXAMPLE 5 | EXAMPLE 6 | EXAMPLE 7 | EXAMPLE 8 |
|---|---|---|---|---|---|
| Niax [R.T.M.] 34-28 (a) | 90 | 0 | 0 | 0 | 0 |
| Niax [R.T.M.] 31-28 (b) | 0 | 90 | 0 | 45 | 45 |
| Murtranol [R.T.M.] 9151 (c) | 0 | 0 | 90 | 0 | 0 |
| Pluracol [R.T.M.] 726 | 0 | 0 | 0 | 45 | 0 |
| Pluracol [R.T.M.] 2010 (d) | 0 | 0 | 0 | 0 | 45 |
| 1,6-Hexanediol | 10 | 10 | 10 | 10 | 10 |
| DC [R.T.M.]-190 | 0.5 | 0.5 | 0.5 | 0.5 | 1.0 |
| Dabco [R.T.M.] 33LV | 0.5 | 0.5 | 0.5 | 0.5 | 0.4 |
| Dabco [R.T.M.] T-12,(drops) | 5 | 5 | 5 | 5 | 0 |
| Niax [R.T.M.] A-1 (e) (drops) | 0 | 0 | 0 | 15 | 0 |
| DEOA (f) | 0 | 0 | 0 | 0 | 2.0 |
| Water | 1.5 | 1.5 | 1.5 | 1.5 | 1.5 |
| Isonate [R.T.M.] 143L | 60.3 | 60.3 | 60.3 | 60.3 | 66.7 |
| Isocyanate Index | 110 | 110 | 110 | 110 | 105 |
| Processing Conditions | | | | | |
| Cream time, sec. | 20 | 20 | 16 | 15 | 14 |
| Rise time, sec. | 120 | 120 | 95 | 70 | 30 |
| Tack-free time, sec. | 390 | 300 | 280 | 150 | 35 |

## Table 2 – Continued

| Formulation (g) | EXAMPLE 4 | EXAMPLE 5 | EXAMPLE 6 | EXAMPLE 7 | EXAMPLE 8 |
|---|---|---|---|---|---|
| **Physical Properties** | | | | | |
| Foam density, pcf. | 4.4 | 4.8 | 4.0 | 4.8 | 7.6 |
| Hysteresis loss, m% | 73.1 | 75.4 | 76.6 | 62.8 | 72.1 |
| Compression load, 25%, lb. | 41.1 | 49.9 | 35.4 | 30.9 | 3.6 |
| kg | 18.7 | 16.5 | 16.1 | 14.0 | 1.6 |

(a) Graft polyether polyol (UCC), Equivalent weight: 2000

(b) Graft polyether polyol (UCC), Equivalent weight: 2000

(c) PHD polyol (Mobay), Equivalent Weight: 2000

(d) Polyether diol (BASF), Equivalent Weight: 1000

(e) Tertiary amine catalyst (UCC)

(f) Diethanolamine (UCC)

**Claims**

1. An energy-absorbing flexible polyurethane foam formed from the reaction of a mixture of an aromatic polyisocyanate (12), at least one polyol (10), and a blowing agent (22), characterised in that said foam is a polyurethane liquid crystal polymer-modified polyurethane foam (20) which is the copolymerization reaction product of a mixture of said aromatic polyisocyanate (12), said at least one polyol (10), said blowing agent (22), and an alkane diol (14) having between six to ten carbon atoms in an amount of between 1 to 50 parts by weight per 100 parts of the total weight of said at least one polyol (10).

2. An energy-absorbing flexible polyurethane foam according to claim 1, in which said at least one polyol (10) has an average equivalent weight of more than 3000 and a functionality of at least two, and said alkane diol (14) is present in an amount of between 2 to 20 parts by weight per 100 parts of the total weight of said at least one polyol (10).

3. An energy-absorbing flexible polyurethane foam according to claim 2, in which the alkane diol (14) is 1,6-hexane diol.

4. An energy-absorbing polyurethane foam according to claim 2, in which the alkane diol (14) is 1,8-octane diol.

5. An energy-absorbing polyurethane foam according to claim 2, in which the alkane diol (14) is 1,10-decane diol.

6. An energy-absorbing polyurethane foam according to claim 2, in which the aromatic polyisocyanate (12) is a modified diphenylmethane di-isocyanate in liquid state.

7. An energy-absorbing polyurethane foam according to claim 2, in which said at least one polyol (10) is a polyether triol having an equivalent weight of at least 3000.

8. An energy-absorbing polyurethane foam according to claim 2, in which said at least one polyol (10) is a

6

blend of a polyether polyol having an equivalent weight of between 3000 to 5000 and an aromatic polyester polyol prepared by the transesterification of polyethylene terephthalate or dimethyl terephthalate.

9. A method of making an energy-absorbing flexible polyurethane foam according to claim 1, which method comprises reacting an organic polyisocyanate (12) with at least one polyol (10) selected from the group consisting of polyether polyols and polyester polyols, said polyol (10) having an equivalent weight of between 3000 to 20,000 and a functionality of at least 2, in the presence of a blowing agent (22) and a catalyst, characterised in that the reaction is carried out in admixture with an alkane diol (14) having six to ten carbon atoms .

10. A method of making an energy-absorbing flexible polyurethane foam according to claim 9, in which the alkane diol (14) is 1,6-hexane diol.

11. A method of making an energy-absorbing flexible polyurethane foam according to claim 9, in which the alkane diol (14) is 1,8-octane diol.

12. A method of making an energy-absorbing flexible polyurethane foam according to claim 9, in which said at least one polyol (10) is a polyether triol having an equivalent weight of at least 3000.

13. A method of making an energy-absorbing flexible polyurethane foam according to claim 9, in which said at least one polyol (10) is a blend of a trifunctional polyether polyol having an equivalent weight of between 3000 to 5000 and an aromatic polyester polyol prepared by the transesterification of polyethylene terephthalate or dimethyl terephthalate in an amount of up to 40 parts by weight per 100 parts by weight of the total weight of said polyether polyol.

14. A method of making an energy-absorbing flexible polyurethane foam according to claim 9, in which said aromatic polyisocyanate (12) is a modified diphenylmethane di-isocyanate in liquid state.

EP 0 473 220 A2

## Fig.1.

Fig. 2.

Fig. 3.

Fig. 4.